# FASCICULE DE BREVET EUROPEEN

(11) **EP 0 854 802 B1**
(45) Date de publication et mention de la délivrance du brevet: **08.09.1999**
(21) Numéro de dépôt: 95936597.4
(22) Date de dépôt: 24.10.1995
(51) Int. Cl.: B60R 25/00

(54) **ANTIVOL BLOQUE-PEDALES DE FREIN ET D'EMBRAYAGE VOITURES**
DIEBSTAHLSCHUTZVORRICHTUNG ZUM BLOCKIEREN DES BREMS- UND KUPPLUNGSPEDALS EINES KRAFTFAHRZEUGES
ANTI-THEFT DEVICE FOR LOCKING THE BRAKE AND CLUTCH PEDALS OF A MOTOR VEHICLE

(43) Date de publication de la demande: 29.07.1998
(73) Titulaire: Mellini, Alfredo, 94880 Noiseau (FR); Mellini, Joseph, 94420 Le-Plessis-Trévise (FR); Aliano, Joseph, 93380 Pierrefite (FR)
(72) Inventeur: Mellini, Alfredo, 94880 Noiseau (FR); Mellini, Joseph, 94420 Le-Plessis-Trévise (FR); Aliano, Joseph, 93380 Pierrefite (FR)
(74) Mandataire: Thinat, Michel
(86) Numéro de dépôt international: FR9501402
(87) Numéro de publication internationale: WO9715476

(56) Documents cités:
- EP-A- 0 616 929
- DE-U- 9 215 118
- FR-A- 2 419 846
- FR-A- 2 579 943
- FR-A- 2 681 823
- FR-A- 2 719 005
- GB-A- 2 023 520
- GB-A- 2 091 656
- US-A- 2 330 536

## Description

La présente invention concerne un dispositif antivol pour véhicule automobile.

On connaît un tel dispositif décrit dans le document EP-A-0 616 929 et comprenant les caractéristiques techniques telles qu'énoncées dans le préambule de la revendication 1.

Ce dispositif connu a pour inconvénient majeur d'être extrêmement difficile à mettre en place pour bloquer les bras de pédales de frein et d'embrayage à cause de la tige coulissante comprenant deux parties articulées l'une à l'autre.

L'invention propose un dispositif antivol agencé de manière à éliminer l'inconvénient ci-dessus du dispositif antivol connu.

A cet effet, le dispositif de l'invention comprend les caractéristiques techniques de la partie caractérisante de la revendication 1.

D'autres caractéristiques avantageuses de l'invention ressortent également des revendications dépendantes 2 à 13.

L'efficacité du dispositif antivol de l'invention résulte à la fois d'un fonctionnement simple, d'une grande maniabilité, d'une fabrication élémentaire et solide puisque les parties qui le composent peuvent être métalliques.

L'invention sera mieux comprise et d'autres buts, caractéristiques détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :

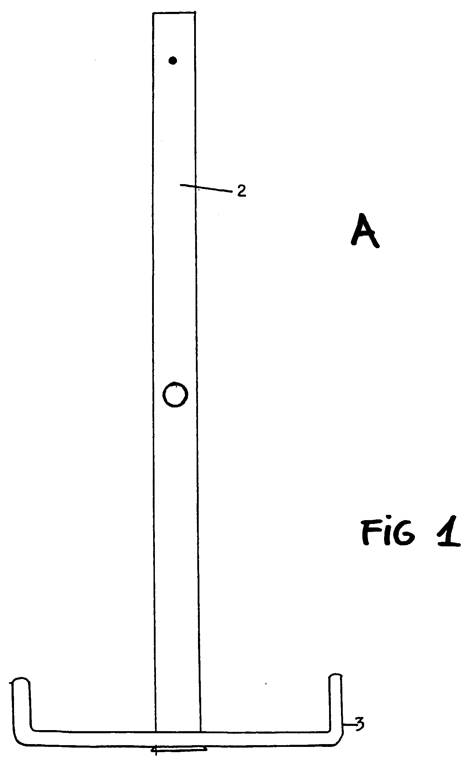

- la figure 1 représente la partie A vue longitudinalement ;

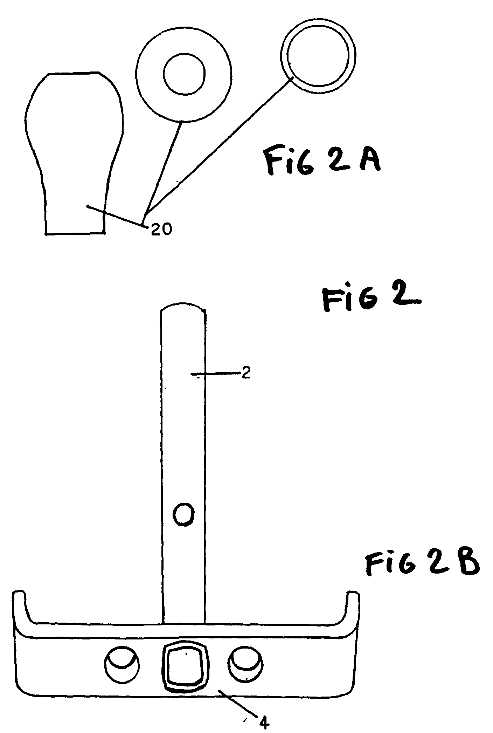

- la figure 2 représente la partie A vue en perspective et la poignée vue sur un côté et en perspective ;
- la figure 3 représente la serrure en différentes perspectives à l'état séparé et le système de verrouillage de l'ensemble ;

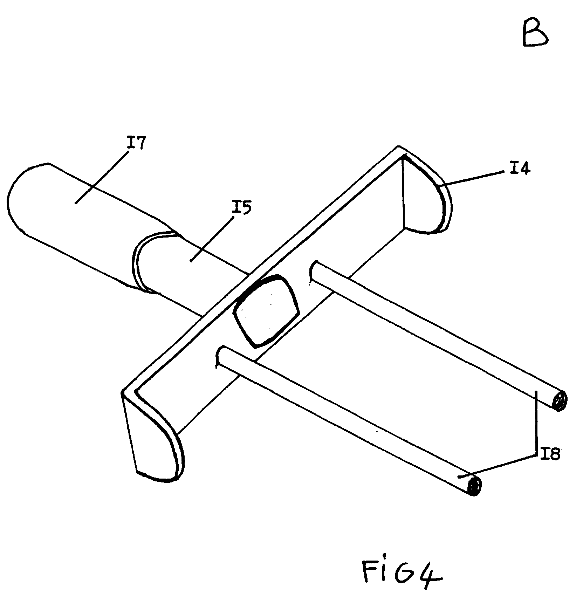

- la figure 4 représente la partie B vue en perspective ;

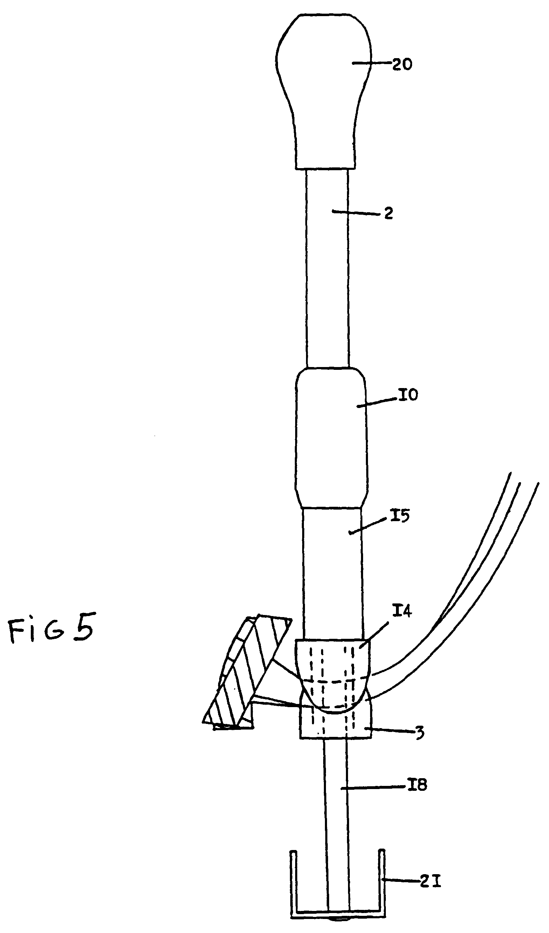

- la figure 5 représente l'antivol vu de côté, et fermé ;

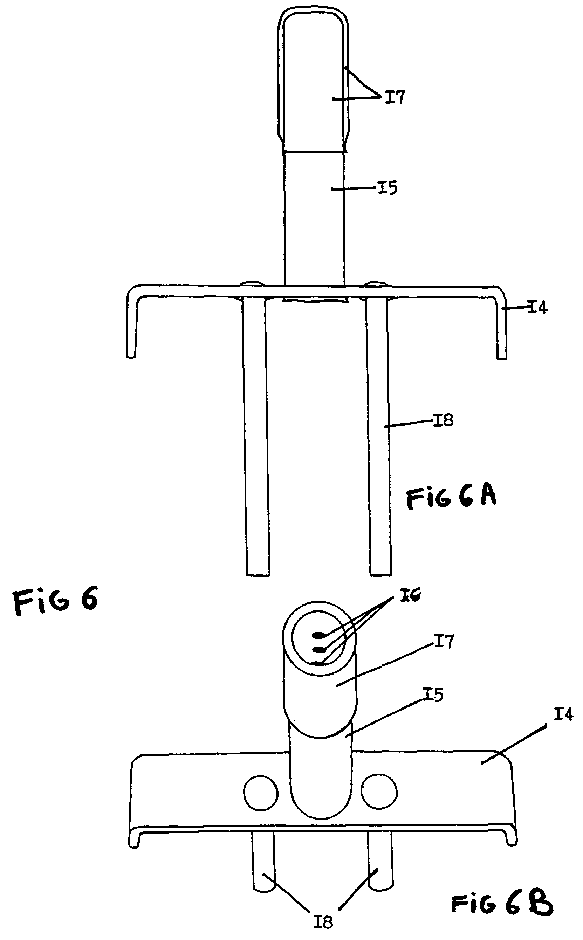

- la figure 6 représente une vue longitudinale de la partie B et en perspective ;

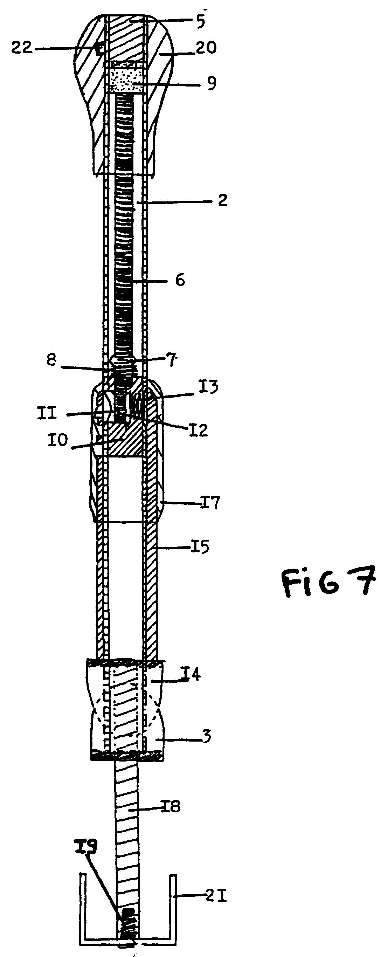

- la figure 7 représente l'antivol vu de côté et en coupe ;

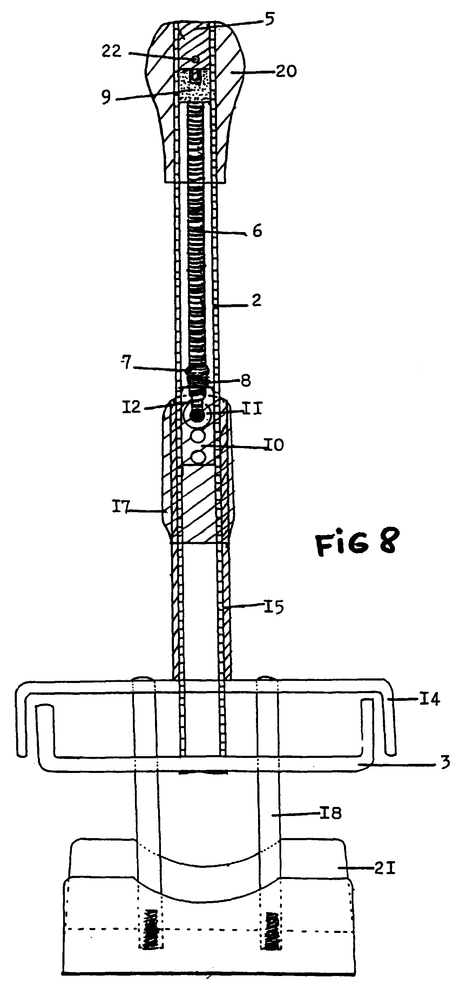

- la figure 8 représente l'antivol vu de face et en coupe ;

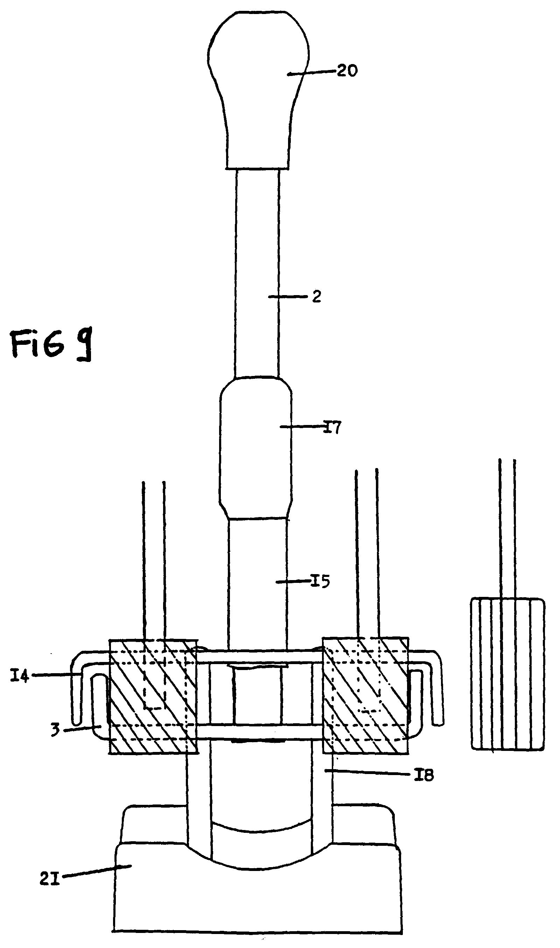

- la figure 9 représente l'antivol vu longitudinalement et tel qu'il se présente dans le véhicule une fois fermé ; et

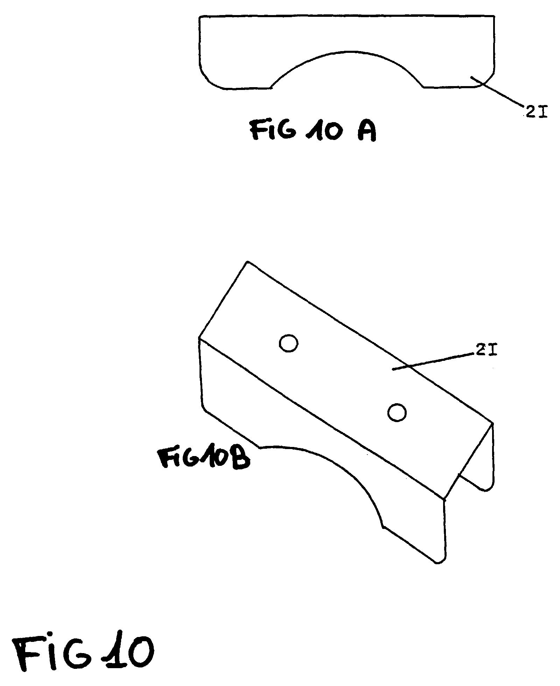

- la figure 10 représente la partie C vue de côté et en perspective.

Les parties 3 et 14 enserrent donc les pédales de frein et d'embrayage, l'avantage de ce système se différencie des autres du fait de sa grande simplicité d'utilisation puisqu'il suffit d'enserrer les pédales de frein et d'embrayage et de tirer longitudinalement la poignée de préhension 20 pour provoquer le verrouillage du système, l'ouverture reste aussi simple, il suffit d'un demi tour de clef, l'antivol est ainsi déverrouillé. L'utilisateur repousse alors longitudinalement la partie 2 vers le plancher du véhicule, libérant les pédales précitées, il est ainsi possible de ranger l'antivol sous le siège vu ses faibles dimensions.

Cet antivol ne demande aucune adaptation même ponctuelle sur le véhicule concerné,puisque le propriétaire peut à tout moment enlever ou replacer le dispositif sans pour cela détériorée son automobile.

La partie A forme une ancre,ses bras sont constitués par une plaque de metal rectangulaire 3,celle-ci est coudée à chacune de ces extrèmités longitudinales,au centre de sa largeur deux perforations sont conçues,perpendiculairement à ce rectangle 3 et au centre de celui-ci est par exemple sertie et soudée une tige 2,cette dernière est perforée d'un orifice,à l'intérieur de cette tige 2 un conduit est conçu apte à recevoir le cylindre 15.La longueur et les coudes de ce rectangle 3 ainsi que le 14 sont calculés de façon à s'adapter aux différents type de véhicules,ceci concernant l'espace séparant les pédales de frein et d'embrayage du plancher,où leurs ecartement l'une de l'autre.

A l'extrémité de la tige 2 est placée et bloquée à l'aide du pène 22 la serrure 5.A l'intérieur de la tige 2 se trouve emboité dans la serrure 5 grâce au rail de celle-ci et au sillon de l'embout 9 un verrou ou tige 6 mobile qui est par exemple soudé à l'embout cylindrique 9,à l'extrémité opposée de cet embout deux pincements 7 sont éxécutés jouant le rôle de butée pour le resort de rappel 8,engagé axialement sur le verrou 6,a l'extrémité 12 de ce verrou 6 son diamètre a été reduit de manière à pénétrer dans la perforation longitudinale du cylindre 10 qui est creusé à cet effet et fixé à l'intérieur de la tige 2 par exemple par soudure à points,le péne 11 est également introduit à l'intérieur du cylindre précité perpendiculairement à la tige 2,il est poussé par un ressort de rappel 13.Au dessus de ce verrou ou pène 11 un ergot est pratiqué.

Ce verrou ainsi comformé vient se loger dans la tige 2,sa manoeuvre longitudinale se fait a l'aide d'une clef amovible propre a chaque antivol.

La partie B est formée d'une plaque de metal rectangulaire 14 de deux tiges 18 donc leur longueur est calculée de façon à s'adapter aux différents types de vehicules,ceci concernant l'espace entre les pédales et le plancher,ces tiges précitées sont par exemple sertie et soudée perpendiculairement à ce rectangle 14,a l'extrémité opposé des tiges 18,la surface interne de chacune est creusée d'un sillon hélicoïdale,aptes a recevoir le filet des vises 19.

L'emplacement des tiges 18 est défini de façon à entrer dans les deux perforations du rectangle 3.Au centre de cette plaque 14 est par exemple sertie et soudée un cylindre 15 où viendra coulisser longitudinalement la tige 2 laissant un très faible jeu circonferenciel.A l'éxtrémité de ce cylindre 15 des perforations 16 ont été pratiquées,ceux-ci sont aptes à recevoir l'ergot du pène 11.Afin de protéger ces perforations un tube 17 est fixé autour du cylindre 15 par des soudures à points.

Une poignée fixe de prehension 20 comportant une cavité dans sa longueur afin de permettre l'entrée de la tige 2.Facilitant ainsi les manoeuvres de l'antivol.

La partie 21 est constituée d'une plaque rectangulaire coudée à angle droit dans sa largeur.Les grandes dimensions de ce rectangle sont étudiées pour facilité l'appui contre le plancher du véhicule.Deux perforations sont pratiquées,aptes a maintenir les tiges 18 par des vis 19 de pression,et par la forme de leur tête dont le diamètre est superieur a celui des perforations de la partie 21.

L'utilisation de l'antivol est très simple,puisqu'il suffit de tourner la clef amovible dans la serrure 5 d'un demi-tour,ce qui entraine alors la rotation grâce au sillon du cylindre 9 et au rail de la serrure 5 la tige 6,qui pousse alors avec son embout 12 le pène mobile 11 a l'encontre du ressort 13,ce qui a pour effet de libérer la partie 15 puisque l'ergot du pène 11 sort d'une des perforations 16 du cylindre 15.Il suffit a l'utilisateur de pousser la poignée fixe 20 vers le plancher du véhicule concerné,l'emplacement des bras de pédales de frein et d'embrayage s'écarte longitudinalement,ont peut alors liberer facilement ces deux pédales précitées.

Pour la fermeture et l'immobilisation du système,il suffit a l'utilisateur de tourner le clef amovible d'un demi-tour,le pène 11 est remis en position fermé,l'utilisateur peut alors tirer la poignée fixe 20 a l'opposée de l'écartement enserrent ainsi les pédales précitées,l'ergot par sa forme biseauté et le sens de son emplacement,glisse longitudinalement contre la paroi intérieur du cylindre 15 et pénètre dans l'une des perforations 16,suivant l'écartement des pédales au plancher du véhicule concerné.

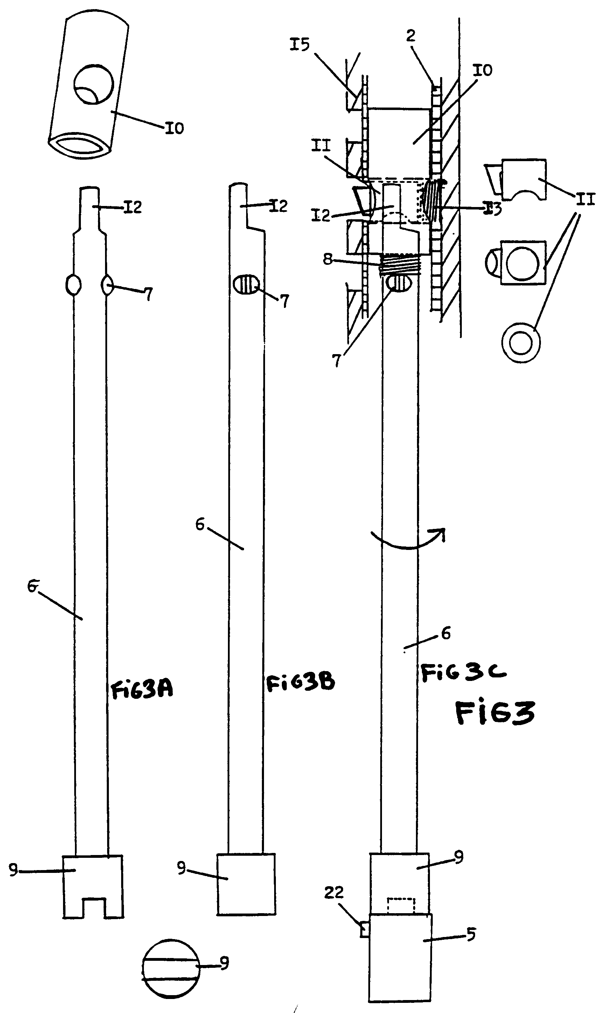

L'angle droit que forme l'ergot du pène 11 empêche l'ecartement des parties 14 et 3,et par ce fait immobilise l'antivol autour des pédales de frein et d'embrayage,plus précisément fig 3.

Il doit d'ailleurs être entendu que la description qui précède n'a été donnée qu'a titre d'exemple et qu'elle ne limite nullement le domaine de l'invention dont on ne sortirait pas en remplaçant les détails d'exécution décrits par tous autres équivalents.

## Revendications

1. Dispositif antivol pour véhicule automobile, du type comprenant :
une première partie (A) constituée d'un élément allongé mobile (3) auquel est fixée une tige (2),
une deuxième partie (B) constituée d'une plaque (14) à laquelle est fixé un cylindre (15) dans lequel coulisse longitudinalement la tige (2), de façon à recevoir entre les deux parties (A, B) les bras d'une pédale d'embrayage et d'une pédale de frein,
une serrure à clé (5) pour verrouiller ou déverrouiller la tige (2) par rapport au cylindre (15),
la plaque (14) de la deuxième partie (B) étant solidaire d'un moyen en forme de tige (18) qui prend appui sur le plancher et la tige (2) étant, lors de la fermeture du dispositif, tirée longitudinalement à l'opposé du plancher pour déplacer l'élément allongé mobile (3) de la première partie (A) vers la plaque (14) suivant la distance séparant les pédales du plancher, de façon que les bras de pédales soient ensérrés par l'élément allongé (3) et la plaque (14), et lors de l'ouverture du dispositif, repoussée vers le plancher pour écarter l'élément allongé mobile (3) de la plaque (14),
caractérisé en ce que : la serrure à clé (5) est fixée à l'extrémité libre de la tige (2) et entraîne en rotation une tige de commande (6) logée dans la tige (2), la tige de commande (6) ayant à son extrémité longitudinalement opposée un embout (12) coopérant avec un pène (11) pour verrouiller/déverrouiller la tige (2) par rapport au cylindre (15), le pène (11) étant logé dans la tige (2) et mobile perpendiculairement à celle-ci pour s'engager dans des perforations (16) pratiquées longitudinalement dans le cylindre (15), et
la tige (2) est rigide sur toute sa longueur et est fixée, à l'extrémité libre de sa partie faisant saillie du cylindre (15) à l'opposé de l'élément allongé mobile (3), à une poignée de préhension (20) permettant par une simple traction exercée sur celle-ci de déplacer longitudinalement la tige (2) relativement au cylindre (15) à la position de blocage des bras de pédale par les première et seconde parties (A, B) à laquelle le pène (11) verrouille la tige (2) par rapport au cylindre (15).

2. Dispositif selon la revendication 1, caractérisé en ce que l'élément allongé mobile (3) de la première partie (A) est en forme de plaque et le moyen en forme de tige (18) a une longueur calculée de façon à s'adapter à l'espace séparant les pédales du plancher quel que soit le type de véhicule.

3. Dispositif selon la revendication 1 ou 2, caractérisé en ce que l'embout (12) est apte, lors du déverrouillage du dispositif, à pousser le pène mobile (11) pour qu'il sorte des perforations (16) libérant ainsi le cylindre (15), et lors du verrouillage du dispositif, à libérer le pène (11) pour qu'il pénètre dans l'une des perforations (16).

4. Dispositif selon la revendication 3, caractérisé en ce qu'il comprend à l'intérieur de la tige (2) un ressort de rappel (13) qui pousse le pène (11) en engagement dans l'une des perforations (16), l'embout (12) venant pousser le pène mobile (11) à l'encontre du ressort (13) lors du déverrouillage et libérant le pène (11) pour qu'il pénètre dans l'une des perforations (16) sous l'action du ressort (13) lors du verrouillage.

5. Dispositif selon la revendication 4, caractérisé en ce que l'ergot du pène (11) a d'une part, un angle droit l'empêchant, après verrouillage du dispositif, de sortir des perforations (16) dans le sens de l'écartement des deux plaques (3, 14), et d'autre part, une forme biseautée lui permettant, après verrouillage du dispositif, de sortir des perforations puis de glisser le long de la paroi interne du cylindre (15) jusqu'à la perforation suivante dans le sens du rapprochement des deux plaques.

6. Dispositif selon l'une des revendications précédentes, caractérisé en ce qu'il comporte une troisième partie (21) destinée à venir en appui contre le plancher du véhicule et reliée à la deuxième plaque (14) par deux tiges (18) dont la longueur est déterminée pour s'adapter à l'espace séparant les pédales du plancher.

7. Dispositif selon la revendication 6, caractérisé en ce que la tige (18) est perpendiculairement liée à la deuxième plaque (14) et traverse une perforation de la première plaque (3).

8. Dispositif selon la revendication 6 ou 7, caractérisé en ce que la troisième partie (21) est une plaque perforée pour recevoir les tiges (18) et maintenue par une vis de pression (19).

9. Dispositif selon l'une des revendications précédentes, caractérisé en ce que les perforations (16) du cylindre (15) sont protégées par un tube (17) qui est fixé autour du cylindre (15).

10. Dispositif selon l'une des revendications précédentes, caractérisé en ce que l'embout (12) de la tige de commande (6) a un diamètre réduit pour pénétrer dans une perforation du pène (11).

11. Dispositif selon l'une des revendications précédentes, caractérisé en ce qu'il comprend un ressort de rappel (8) engagé axialement sur ladite extrémité opposée de la tige de commande (6) et en butée contre des pincements (7) formés sur cette extrémité, pour coopérer avec un cylindre (10) fixé à l'intérieur de la tige (2) et dans lequel est introduit perpendiculairement le pène (11).

12. Dispositif selon l'une des revendications précédentes, caractérisé en ce que les plaques (3, 14) sont coudées à leurs extrémités de sorte que les première (A) et seconde (B) parties ont une forme générale en ancre.

13. Dispositif selon l'une des revendications précédentes, caractérisé en ce que la poignée de préhension (20) comprend une cavité dans sa longueur et dans laquelle est fixée l'extrémité libre de la tige (2).

## Claims

1. Anti-theft device for an automotive vehicle, of the type comprising:
a first part (A) consisting of an elongated movable element (3) to which is fastened a rod (2),
a second part (B) consisting of a plate (14) to which is fastened a cylinder (15) in which the rod (2) is sliding longitudinally so as to receive, between both parts (A, B), the arms of a clutch pedal and of a brake pedal.
a lock with a key (5) for locking and unlocking the rod (2) with respect to the cylinder (15),
the plate (14) of the second part (B) being made fast to a rod-shaped means (18) which is caused to bear upon the floor and the rod (2) being, during the closing of the device, longitudinally pulled oppositely from the floor for displacing the movable elongated element (3) of the first part (A) towards the plate (14) along the distance separating the pedals from the floor so that the arms of the pedals be tightly enclosed by the elongated element (3) and the plate (14) and during the opening of the device, pushed towards the floor for moving the movable elongated element (3) away from the plate (14),
characterized in that : the lock with a key (5) is fastened at the free end of the rod (2) and rotates a control rod (6) accommodated in the rod (2), the control rod (6) having at its longitudinally opposite end an end portion (12) co-operating with a catch (11) for locking/unlocking the rod (2) with respect to the cylinder (15), the catch (11) being housed in the rod (2) and movable in perpendicular relation to the latter for engaging perforations (16) formed longitudinally in the cylinder (15), and the rod (2) is rigid over its whole length and is fastened, at the free end of its portion projecting from the cylinder (15) oppositely from the movable elongated element (3), to a gripping handle (20) permitting through a simple pull exerted upon the latter to longitudinally displace the rod (2) in relation to the cylinder (15) to the position of blocking the pedal arms with the first and the second parts (A, B) to which the catch (11) locks the rod (2) with respect to the cylinder (15).

2. Device according to claim 1, characterized in that the movable elongated element (3) of the first part (A) is in the shape of a plate and the rod-shaped means (18) has a length calculated so as to adapt itself to the space separating the pedals from the floor irrespective of the type of vehicle.

3. Device according to claim 1 or 2, characterized in that the end portion (12) is adapted, during the unlocking of the device, to push the movable catch (11) in order that it disengages the perforations (16) thus releasing the cylinder (15) and during the locking of the device to release the catch (11) in order that it enters one of the perforations (16).

4. Device according to claim 3, characterized in that it comprises inside of the rod (2) a return spring (13) which pushes the catch (11) into engagement with one of the perforations (16), the end portion (12) being caused to push the movable catch (11) against the spring (13) during the unlocking and releasing tile catch (11) in order that it enters one of the perforations (16) under the action of the spring (13) during locking.

5. Device according to claim 4, characterized in that the stud of the catch (11) has on the one end a right angle preventing it after locking of the device from leaving the perforations (16) in the direction of moving apart of both plates (3, 14) and on the other hand a bevelled shape permitting it after locking of the device to leave the perforations and then to slide along the internal wall of the cylinder (15) to the next perforation in the direction of movement of both plates towards each other.

6. Device according to one of the foregoing claims, characterized in that it comprises a third part (21) intended to be caused to bear upon the floor of the vehicle and connected to the second plate (14) by two rods (18) of which the lenght is determined in order to adapt itself to the space separating the pedals from the floor.

7. Device according to claim 6, characterized in that the rod (18) is connected it, perpendicular relationship to the second plate (14) and extends through one perforation of the first plate (3).

8. Device according to claim 6 or 7, characterized in that the third part (21) is a perforated plate for receiving the rods (18) and held by a pressure screw (19).

9. Device according to one of the foregoing claims, characterized in that the perforations (16) of the cylinder (15) are protected by a tube (17) which is fastened about the cylinder (15).

10. Device according to one of the foregoing claims, characterized in that the end portion (12) of the control rod (6) has a reduced diameter for entering one perforation of the catch (11).

11. Device according to one of the foregoing claims, characterized in that it comprises a return spring (8) axially engaged with upon the said opposite end of the control rod (6) and abutting pinched portions (7) formed onto this end, for co-operating with a cylinder (10) fastened inside of the rod (2) and into which the catch (11) is inserted perpendicularly.

12. Device according to one of the foregoing claims, characterized in that the plates (3, 14) are bent at their ends so that the first part (A) and the second part (B) have a general anchor-like shape.

13. Device according to one of the foregoing claims, characterized in that the gripping handle (20) comprises a cavity in its length and in which is fastened the free end of the rod (2).

## Patentansprüche

1. Diebstahlsicherungsvorrichtung für ein Kraftfahzeug, derjenigen Gattung mit:
einem ersten Teil (A), der aus einem bewegbaren länglichen Element (3), an welchem eine Stange (2) befestigt ist, besteht,
einem zweiten Teil (B), der aus einer Platte (14), an welcher ein Zylinder (15), in welchem die Stange (2) in Längsrichtung gleitet, besteht, um zwischen den beiden Teilen (A, B) die Arme eines Kupplungspedals und eines Bremspedals aufzunehmen,
einem Schloss mit Schlüssel (5) um die Stange (2) in bezug auf den Zylinder (15) zu verriegeln und zu entriegeln,
wobei die Platte (14) des zweiten Teiles (B) mit einem stangenförmigen Mittel (18), das sich an dem Fußboden abstützt, fest verbunden ist und wobei die Stange (2), während des Verschlusses der Vorrichtung, in der von dem Fußboden abgewandten Längsrichtung gezogen wird, um das bewegbare längliche Element (3) des ersten Teiles (A) zu der Platte (14) hin entlang der die Pedale vom Fußboden trennenden Entfernung zu verschieben, damit die Arme der Pedale durch das längliche Element (3) und die Platte (14) eng umschlossen werden und während der Öffnung der Vorrichtung, zu dem Fußboden hin geschoben wird, um das bewegbare längliche Element (3) von der Platte (14) zu entfernen,
dadurch gekennzeichnet daß : das Schloss mit Schlüssel (5) an dem freien Ende der Stange (2) befestigt ist und eine in der Stange (2) untergebrachte Betätigungsstange (6) zur Drehbewegung antreibt wobei die Betätigungstange (6) an ihrem in Längsrichtung entgegengesetzten Ende, einen mit einem Riegel (11) zusammenwirkenden Ansatz (12) hat, um die Stange (2) in bezug auf den Zylinder (15) zu verriegeln/entriegeln, wobei der Riegel (11) in der Stange (2) untergebracht ist und senkrecht zu dieser beweglich ist, um in in dem Zylinder (15) in Längsrichtung gebildeten Löchern (16) einzudringen, und die Stange (2) über ihre ganze Länge steif ist und an dem freien Ende ihres aus dem Zylinder (15) in der dem bewegbaren länglichen Element (3) entgegengesetzt Richtung vorspringenden Teiles an einem Handgriff (20) befestigt ist, der durch einen einfachen auf diesen ausgeübten Zug es gestattet, die Stange (2) in bezug auf den Zylinder (15) in Längstrichtung zu der Stellung der Sperrung der Pedalarme durch den ersten und den zweiten Teil (A, B), in welcher der Riegel (11) die Stange (2) in bezug auf den Zylinder (15) verriegelt, zu verschieben.

2. Vorrichtung gemäß Anspruch 1, dadurch gekennzeichnet, daß das bewegbare längliche Element (3) des ersten Teiles (A) plattenförmig ist und das stangenförmige Mittel (18) ein derart berechnete Länge hat, um sich an den die Pedale vom Fußboden trennenden Raum anzupassen, was auch die Bauart des Fahrzeuges sein mag.

3. Vorrichtung nach Anspruch 1 oder 2, dadurch gekennzeichnet, daß der Ansatz (12) fähig ist. während der Entriegelung der Vorrichtung, den bewegbaren Riegel (11) zu schieben, damit er die Löcher (16) verlässt und somit den Zylinder (15) freigibt und, während der Verriegelung der Vorrichtung, den Riegel (11) freizugeben, damit er in einem der Löcher (16) eindringt.

4. Vorrichtung gemäß Anspruch 3, dadurch gekennzeichnet daß sie innerhalb der Stange (2) eine Rückstellfeder (13) umfaßt, die den Riegel (11) zum Eingriff in einen der Löcher (16) schiebt, wobei der Ansatz (12) den bewegbaren Riegel (11) entgegen der Feder (13) während der Entrieglung schiebt und den Riegel (11) freigibt, damit er in ein Loch der Löcher (16) unter der Wirkung der Feder (13) während der Verrieglung eindringt.

5. Vorrichtung nach Ansprüch 4, dadurch gekennzeichnet, daß der Zapfen des Riegels (11) einerseits einen rechten Winkel, der ihn verhindert, nach Verriegelung der Vorrichtung, aus den Löchern (16) in der Richtung der Auseinanderbewegung der beiden Platten (3, 14) herauszufahren und andererseits eine abgeschrägte Gestalt hat, die ihm gestattet, nach Verriegelung der Vorrichtung, aus den Löchern herauszufahren und dann entlang der Innenwand des Zylinders (15) bis zum dem nächsten Loch in der Richtung der gegenseitigen Annäherung der beiden Platten zu gleiten.

6. Vorrichtung, nach einem der vorangehenden Ansprüche, dadurch gekennzeichnet, daß sie einen dritten Teil (21) aufweist, der bestimmt ist, zur Abstütztung an dem Fußboden des Fahrzeugs zu kommen und mit der zweiten Platte (14) durch zwei Stangen (18), deren Länge bestimmt ist, um sich an den die Pedale des Fußbodens trennenden Raum anzupassen, verbunden ist.

7. Vorrichtung nach Ansprüch 6, dadurch gekennzeichnet, daß die Stange (18) mit der zweiten Platte (14) senkrecht verbunden ist und ein Loch der ersten Platte (3) durchsetzt.

8. Vorrichtung nach Ansprüch 6 oder 7, dadurch gekennzeichnet, daß der dritte Teil (21) eine gelochte Platte ist, um die Stangen (18) aufzunehmen und die durch eine Druckschraube (19) gehalten wird.

9. Vorrichtung nach einem der vorangehenden Ansprüche, dadurch gekennzeichnet, daß die Löcher (16) des Zylinders (15) durch ein Rohr (17), das um den Zylinder (15) herum befestigt ist, geschützt werden.

10. Vorrichtung nach einem der vorangehenden Ansprüche, dadurch gekennzeichnet, daß der Endansatz (12) der Betätigungstange (6) einen verringerten Durchmesser hat, um in ein Loch des Riegels (11) einzudringen.

11. Vorrichtung gemäß einem der vorangehenden Ansprüche, dadurch gekennzeichnet, daß sie eine auf das besagte entgegengesetzte Ende der Betätigungstange (6) axial aufgesteckte und sich im Anschlag an an diesem Ende gebildeten Quetschungstellen (7) befindende Rückstellfeder (8) umfaßt, um mit einem innerhalb der Stange (2) befestigten Zylinder (10), in welchen der Riegel (11) senkrecht eingeführt wird, zusammenzuwirken.

12. Vorrichtung nach einem der vorangehenden Ansprüche, dadurch gekennzeichnet, daß die Platten (3, 14) an ihren Enden umgebogen sind, sodaß der erste Teil (A) und der zweite Teil (B) eine allgemeine ankerförmige Gestalt haben.

13. Vorrichtung gemäß einem der vorangehenden Ansprüche, dadurch gekennzeichnet, daß der Handgriff (20) einen Hohlraum in seiner Länge in welchem das freie Ende der Stange (2) befestigt ist, umfaßt.
